# EUROPEAN PATENT SPECIFICATION

(11) **EP 1 410 708 B1**
(45) Date of publication and mention of the grant of the patent: **08.10.2008**
(21) Application number: 03254900.8
(22) Date of filing: 06.08.2003
(51) Int. Cl.: A01D 43/06, A01D 43/063, A47L 9/14

(54) **Grass collector**
Grasfangbehälter
Collecteur d'herbe

(30) Priority: 17.10.2002 GB 0224210; 05.12.2002 GB 0228401
(43) Date of publication of application: 21.04.2004
(73) Proprietor: Husqvarna UK Limited, County Durham, DL5 6UP (GB)
(72) Inventor: Smith, Ian Zetterstrom, Yorkshire DL2 2QJ (GB)
(74) Representative: Wright, Howard Hugh Burnby

(56) References cited:
- EP-A- 0 457 432
- FR-A- 2 462 090
- GB-A- 1 127 088
- GB-A- 1 247 057
- US-A- 3 641 754
- US-A- 3 736 736
- US-A- 4 119 414
- US-A- 4 566 257
- US-A- 4 747 259
- US-A- 4 907 403
- US-A- 5 042 241
- US-A- 5 522 908
- US-A- 5 564 265

## Description

The present invention relates to a grass collector for collecting grass cuttings cut by a lawn mower, to a lawn mower having a grass collector, and to collection apparatus.

Various lawn mowers are available which, as well as being arranged to cut grass, are also able to collect a major proportion of the grass cuttings. Most recently, efforts have been made to design lawn mowers which will collect as large a quantity of grass cuttings as is possible in order to reduce the frequency with which the user must carry the grass cuttings from the lawn mower to a grass disposal point, such as a compost heap or bin. In this respect, considerable progress has been made. For example, EP 0614603 discloses a lawn mower in which the collected grass cuttings are deposited within a grass box, and the air which carried the grass cuttings into the grass box is drawn by an impeller through the base and side walls of the grass collector, thereby effecting substantial compaction of the collected grass cuttings.

In some of the most recent lawn mower products, an air permeable basket is carried within the rigid body of a lawn mower such that, once full, the lid of the lawn mower may be opened and the basket lifted out and emptied, with the grass cuttings contained within the basket having been compacted by the air leaving the basket via air permeable regions of the basket.

US 4,566,257 discloses a lawn mower with a disposable grass collection bag attachment. Grass clippings can be collected in a horizontally disposed plastic bag. A plate includes an opening mounted on the mower against the chute allowing passage of the grass clippings and the stream of air carrying them in one direction into the plastic bag. The plate defines a vent opening to allow air to vent in the opposite direction from that which enters the collection bag. The bag is located within a safety container which is openable to allow removal of filled bags and includes a pocket for holding and carrying a supply of empty plastic bags.

US 5,042,241 discloses a method and apparatus for mounting a disposable grass collecting bag to the discharge chute of a walk-behind mower. The bag is received in a grass collector having one end mounted to the mower handlebars and another end mounted to the discharge chute over the disposable bag. The collector mounting to the chute also secures the bag on the chute. During installation, after the bag is mounted about the chute, the body of the bag is folded and placed into the chute. The collector is then mounted to the mower with its inlet about the chute. When the lawn mower is started, the air flow through the chute will expel the bag into the collector and then inflate the bag in the collector to be ready to receive grass clippings.

US 5,564,265 discloses an adapter frame and detachable insert bag fabricated to fit inside the existing grass catcher bag typically supplied with a hand held lawn mower. The bag is fabricated from a non-woven material and sufficiently porous to be permeable to air and serves to collect and dispose of the grass clippings. The assembled frame and insert bag attaches to and fits flush with the opened end of the grass catcher bag so as not to interfere with the existing attachment mechanism of the grass catcher bag to allow easy attachment to the lawn mower.

It is an aim of the present invention to reduce the frequency at which a user must walk to a grass disposal point during cutting of a lawn, and to improve the operation of a lawn mower. In this regard, according to a first aspect of the present invention, a grass collector comprises two or more grass collection receptacles arranged to be nested within each other, each receptacle being removable from the grass collector wherein each receptacle is arranged to be open-topped when the collector is open for removal of a receptacle. In this way, once the inner receptacle is filled, the user can briefly stop cutting the lawn, and lift out the inner receptacle and put it to one side before continuing to mow the lawn whilst filling the next receptacle. Once each of the receptacles have been filled the user can make a single journey to the grass disposal point, stopping only to collect each of the receptacles which have been put to one side. Once emptied, the receptacles can be nested one inside another again and carried back to the lawn mower where they can be replaced on the lawn mower so that the user can continue to mow the lawn.

It is preferred that the grass collection receptacles are separable.

One of the collection receptacles might be an outer receptacle within which the or each other receptacle is locatable. Depending on the arrangement, each of the collection receptacles may, in fact, be identical, arranged such that each will nest inside another. However, in some arrangements, it will be preferable for the outer receptacle to be different from the receptacle or receptacles which is locatable within it. This might depend on the space available to house the collection receptacles.

Where the outer receptacle is different, it might have an air permeable region which is able to collect finer debris than the or each inner receptacle. This would have the effect of reducing the additional resistance to the flow of air through the grass collector when all of the receptacles are nested within each other. In some arrangements, this might not be a problem, in which case, the fineness of the air permeable region in each receptacle can be the same. This would certainly be most appropriate where all of the receptacles are identical.

It should be also be appreciated that this grass collector may be applied to various different types of lawn mower, including wheel-supported lawn mowers and lawn mowers which are supported, in use, by a cushion of air whereby it hovers just above the ground. The grass collector may be arranged so as to be located above the grass cutting chamber, or may be arranged to be supported behind the grass collecting chamber, perhaps supported from the handle of the lawn mower.

It is also preferred that the receptacles are in the form of baskets which may be simply lifted from the grass collector to be emptied. The grass collector may additionally include an enclosure casing within which the receptacles are located, and the enclosure casing could be defined by one or more walls of the body of a lawn mower. The enclosure would preferably include an openable cover which, once open, permits the removal of the receptacles.

According to a second aspect of the invention, a lawn mower comprises a grass cutting system, and a grass collector according to the first aspect of the invention. The lawn mower may be one which is wheel-supported, or one which is supported, in use, upon a cushion of air generated by the mower. The cutting system is most preferably a rotary cutting system including a cutter blade rotatable about a vertical axis, but could also include other types of cutting systems, such as a cylindrical cutter blade rotatable about a horizontal axis.

The grass collector may be arranged to be disposed generally above the cutting system and generally around the centre of gravity of the lawn mower. In such a case, the collector may include an enclosure casing defined by the body of the lawn mower within which the receptacles may be located. It is preferred that the receptacles are in the form of air permeable baskets which, once full, may be lifted out through an opening in the top of the enclosure. It is also preferred that the enclosure is closed by an openable cover.

Alternatively, the grass collector could be located to the rear of the grass cutting system. It might be supported by the handle of the lawn mower, or from the body of the lawn mower. From the foregoing, it will be appreciated that the concept of this invention is very broad, and may be applied to a variety of different lawn mowers.

According to a third aspect of the invention, a method of operating a lawnmower of the type which collects grass cuttings in a grass collector during mowing comprises mowing a lawn; removing a first grass collection receptacle from the grass collector nesting within a second grass collection receptacle; continuing to mow the lawn; and removing the second grass collection receptacle from the grass collector, wherein each receptacle is arranged to be open-topped when the collector is open for removal of a receptacle.

Other advantageous features are referred to in the claims.

An embodiment of the present invention will now be disclosed by way of example only and with reference to the drawings in which
Figure 1 is a sectional side view of a lawn mower according to the present invention;
Figure 2 is a perspective view of the lawn mower of Figure 1 with the lid opened, and the nesting receptacles shown lifted out and partially lifted out;
Figure 3 is a perspective view of the lawn mower of figures 1 and 2 with a filled inner receptacle lifted out and placed to one side;
Figure 4 is a perspective view of two filled receptacles stacked for carrying to a grass disposal point;
Figure 5 is a schematic side elevation of another lawnmower; and
Figures 6 to 8 are schematic side elevations of the lawnmower of Figure 5 but in different operating positions.

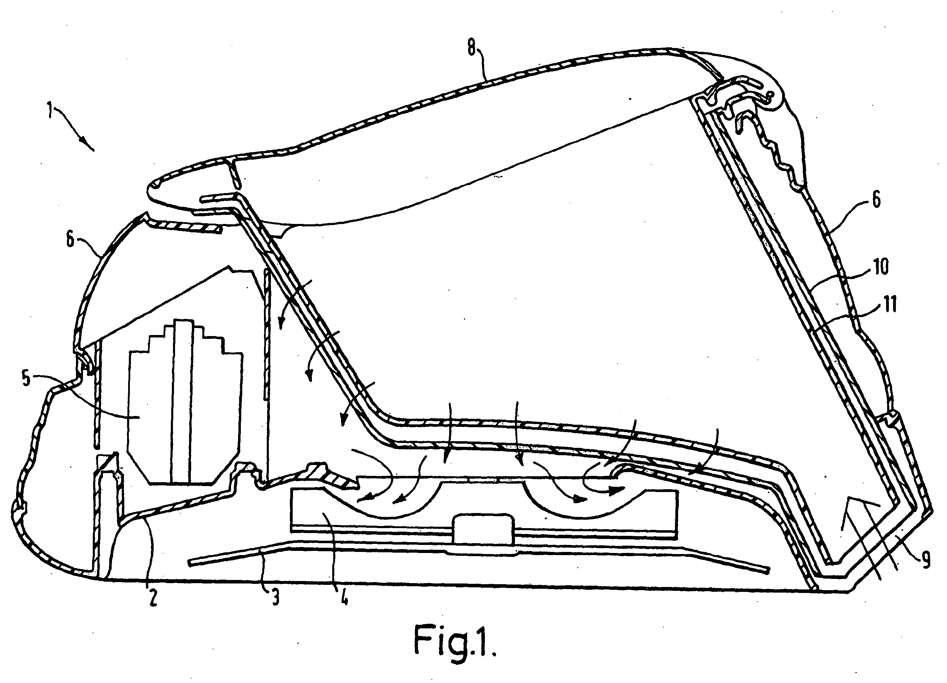

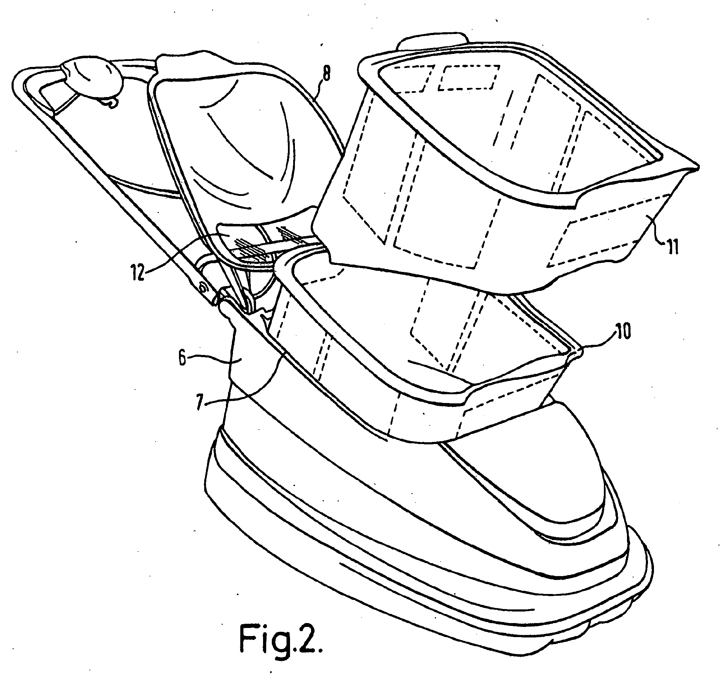

Referring to Figures 1 and 2, a lawn mower 1 is shown having a blade housing 2 defining a cutting chamber within which a cutter blade 3 is mounted for rotation about a vertical axis, together with an impeller 4. The cutter blade 3 and impeller 4 are driven by a motor 5 via a drive line (not shown) in the form a belt. The lawn mower 1 is one which is supported above the ground upon a cushion of air generated by the rotating impeller 4. In use, rotation of the cutter blade 3 and impeller 4 results in the blade 3 cutting the grass as is required by the user. As the lawn mower is pushed forwards, the cutter blade 3 cuts the grass and leaves the grass cuttings on the ground as it passes. Because the cutter blade 3 rotates in one direction the grass cuttings tend to collect in a narrow windrow at one side of the lawn mower 1.

The motor 5 is located towards the very front of the lawn mower 1 so as to maximise the space above the blade housing 2 for grass collection.

It will be seen, most clearly from Figure 2, that the lawn mower 1 includes a rigid body 6 around the outside of the lawn mower 1 having an interior edge 7 which defines an opening in the top of the body 6. The opening is closed by a lid 8 which is pivotally mounted on the rigid body 6. The lid 8 may include a catch by which it is held in the closed position, although no catch is indicated in the drawings. The rigid body 6 defines, at least in part, a substantial enclosure within the lawn mower 1. The rear wall of the rigid body 6 defines the rear wall of the enclosure, and the front of the enclosure is defined by a wall separating it from the motor 5. The lower boundary of the enclosure is defined by the blade housing 2 and by an opening to the impeller 4.

As can be seen in Figure 1, at the rear of the rigid body 6, and just above the ground, is an inlet 9 opening into the enclosure. This inlet 9 is positioned so as to face the ground just above the position at which the windrow is left by the cutter blade 3 as the lawn mower 1 is pushed forward.

Two air permeable grass receptacles 10 and 11, are shaped, firstly so that the outer receptacle 10 will fit within the enclosure such that its air permeable regions are spaced from the walls of the enclosure. The spaces allow air to pass from the air permeable regions through to the eye of the impeller 4 without undue constriction. This will be explained in more detail below. The inner receptacle 11 is arranged to fit within the outer receptacle 10 such that it conforms substantially with the interior surface of the outer receptacle 10. The inner receptacle 11 also includes air permeable regions, which in this case, are aligned with the air permeable regions of the outer receptacle 10. In this case, the inner receptacle 11 is also sized so as to be slightly smaller than the outer receptacle 10 so that it will fit therein. Once the inner receptacle 11 is nested inside the outer receptacle 10, the volume within the inner receptacle I 1 for collection of grass cuttings is not substantially less than the volume of the outer receptacle 10 once the inner receptacle 11 is removed. Once installed within the enclosure, the lid 8 can be shut and the lawn mower 1 is ready for use.

The use and operation of the lawn mower 1 will now be described.

When the motor 5 is switched on, the cutter blade 3 and impeller 4 are caused to rotate at high speed. The impeller 4 directs air into the cutting chamber defined by the blade housing 2 whereby the cutting chamber is maintained at a high pressure relative to the ambient pressure. This lifts the lawn mower 1 above the ground (not shown) whereby the air within the cutting chamber escapes beneath the rim of the blade housing 2, which results in hovering of the lawn mower 1 above the ground. Rotation of the cutter blade 3 about the vertical axis results in grass being cut, and as the lawn mower 1 is pushed across a lawn, the grass passing beneath the lawn mower is cut by the cutter blade 3 and the grass cuttings are dropped on the ground towards one edge of the lawn mower 1 such that it leaves a windrow of grass cuttings behind it.

The air directed beneath the blade housing 2 by the impeller 4 is drawn into the lawn mower 1 via the collection inlet 9 at the rear of the machine and into the inner receptacle 11. From there, it is drawn through the air permeable walls of the inner receptacle 11, then through the air permeable walls of the outer receptacle 10 and then through the space between the outer receptacle 10 and the interior walls of the enclosure to the eye of the impeller 4. The air drawn into the machine via the collection inlet 9, before entering the machine, entrains grass cuttings from the windrow which are carried into the inner receptacle 11.

The air permeable walls of the receptacles 10, 11 are arranged so as to retain the grass cuttings, and may be in the form of a fabric mesh, or merely slots formed in the walls of the receptacles, or by any other suitable arrangement. During use, the inner receptacle 11 will fill up, but the grass cuttings will be compacted by the air passing through the already collected grass cuttings before it reaches the air permeable walls of the receptacles.

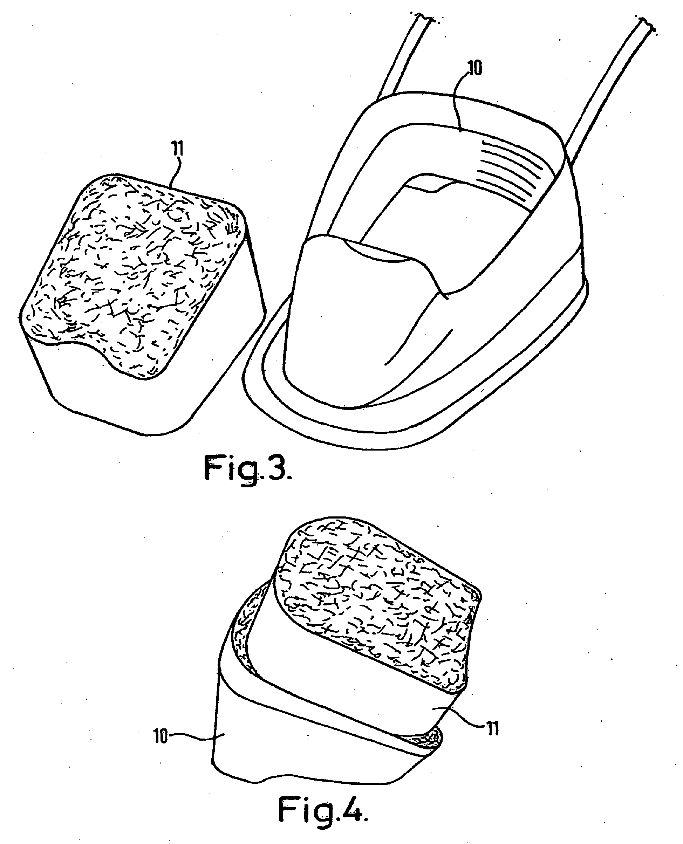

Once the inner receptacle 11 is full, and in this embodiment, the user can see this because of a window 12 located in the lid 8, the user can stop the machine, open the lid 8, and lift out the inner receptacle 11, putting it to one side, for instance on the grass that has just been cut, as is shown in Figure 3. The lid 8, which is not shown in Figure 3, can then be closed, and the user can continue to mow the lawn until the outer receptacle 10 is filled. Once the outer receptacle 10 has been filled, it to may be lifted out of the lawn mower 1, and as the user carries the outer receptacle 10 full of grass towards the grass disposal point, he can also collect the inner receptacle 11, meaning that a single journey can be made. The inner receptacle 11 can be placed on top of the outer receptacle 10 as is shown in Figure 4. Once emptied, the inner receptacle 11 can be nested back within the outer receptacle 10, and the pair of them reinstalled within the body 6 of the lawn mower 1 so that mowing may be continued. Thus the number of journeys that the user has to make to empty the grass is halved. The number of journeys may be further reduced by including more than two receptacles within the body 6. In addition, the receptacles 10 and 11 could be provided with handles by which the receptacles are supported so that a user can hold one of the receptacles in each hand.

The present invention is not limited to the embodiment shown in Figures 1-4. Various alternatives arrangements which take advantage of the nesting grass receptacle principle are included in this invention. For example, the lawn mower 1 shown in Figures 1 and 2, is one supported above the ground by a cushion of air, a hover lawn mower. The nesting grass boxes could equally well be applied to a wheel-supported lawn mower, for example. Also, although the outer receptacle 10 in the embodiment shown is slightly larger than the inner receptacle 11, it would be possible to arrange these to be identical in other embodiments so that it does not matter which receptacle is nested inside the other. However, since each of the receptacles 10 and 11 include air permeable regions, the air passing through the air permeable regions on its way to the impeller 4 could experience too much resistance, and so in such arrangements, the air permeable regions inside the inner receptacle 11 might be relatively coarse, whereas the air permeable regions of the outer receptacle 10 might be relatively fine in order to suitably filter the air on its way to the impeller 4. In that case, the outer receptacle 10 would have to be arranged so that it is always in the outermost position with the inner receptacle 11 stacking or nesting within it.

The receptacles 10 and 11 of the embodiment shown in Figures 1 to 4, are arranged to be mounted in-board, within the rigid body 6 of the lawn mower 1, and above the cutter chamber. However, this could be applied to lawn mowers having the grass collector carried, for example, at the back of the lawn mower attached to the rear of the body of the lawn mower, or hanging from the handle. The inner receptacle 11 would then have to be removable to leave the outer receptacle for grass collection.

The grass collection arrangement shown in the embodiment of Figures 1 to 3 is one which collects grass from the ground behind the lawn mower as the lawn mower is pushed forward. However, other arrangements of grass collection exist where the grass cuttings are not dropped on the ground, but directed from the cutting chamber into a receptacle in the air stream generated by the impeller or by upturned vanes at the tips of the cutter blade. The present invention may be applied to cutting systems which collect grass other than from the ground.

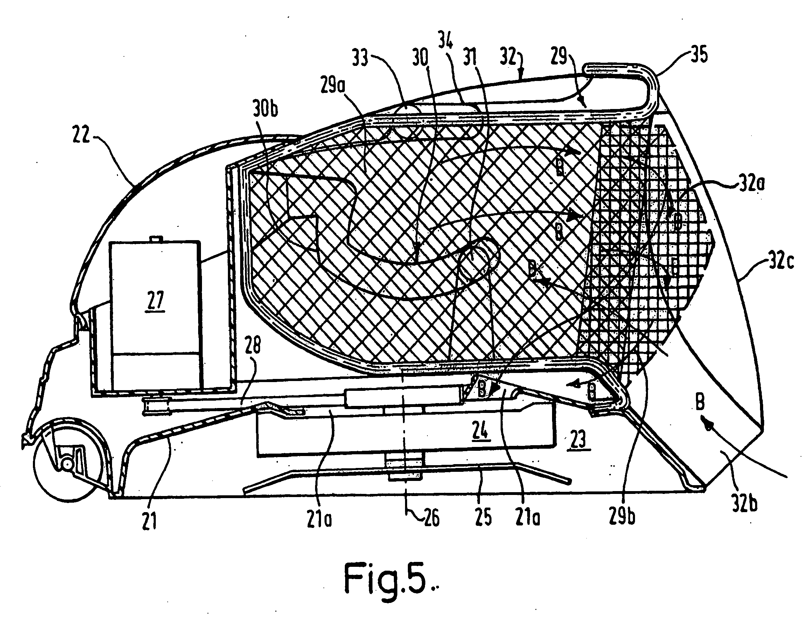

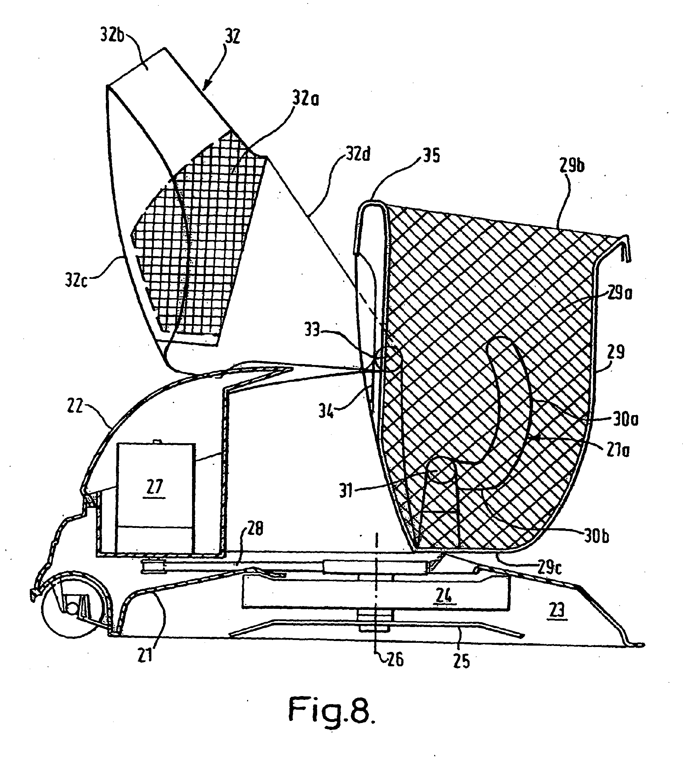

Referring Figures 5 to 8, a lawnmower has a hood or deck 21, and a housing 22 mounted above the deck. The deck 21 defines a hover chamber 23 within which an impeller 24 and a cutter blade 25 are rotatably mounted for rotation about a common vertical axis 26. The impeller 24 and the cutter blade 25 are powered by an electric motor 27 via a drive belt 28. The motor 27 is positioned at the front of the housing 22. A grass-box 29 is mounted above the deck 21, the grass-box being formed with cam tracks 30 on its side surfaces. The cam tracks 33 cooperate with cams 31 constituted by cylindrical bosses formed inside the side walls of the housing 22 at opposite sides thereof. The side walls of the grass-box 29 are formed with perforations 29a, as shown. The closed end wall, indicated by the reference 29c, of the grass-box 29 may be formed with perforations in addition to, or instead of, the perforations 29a. The grass-box 29 has one end 29b (see in particular Figure 8) which is open over substantially the entire cross-section of the grass-box.

The cam tracks 30 are aligned with one another, and each has a first, curved portion 30a, and a second, L-shaped portion 30b. The free end sections of the L-shaped cam track portions 30b terminate at the closed end wall 29c, of the grass-box 29. A lid 32 is pivotally mounted to the housing 22 by means of cylindrical bosses 32 provided on the insides of the side walls of the housing, these bosses engaging within complementary apertures (not shown) formed at the sides of the top, front end (as viewed in Figure 5) of the lid. Alternatively, the bosses could extend outwardly from the sides of the lid 32, and engage within complementary apertures formed on the insides of the side walls of the housing. These bosses 33 constitute cams which engage within cam tracks 34 formed on the side surfaces of the grass-box 29. The lid 32 is (as best shown in Figure 8) formed with perforated or grilled portions 32a. The lid 32 also defines a collection chute 32b which, in the grass cutting position shown in Figure 5, is downwardly directed towards the ground at the rear of the machine.

A number of bin liners 35 are positioned inside the grass box 29, with the liners 35 arranged so as to be stacked one inside another. As shown, the free end of the bin liner 35 is wrapped over the rim of the grass-box 29 at the open end 29b thereof.

Figure 5 shows the lawnmower in its normal (grass-cutting) position with the grass-box 29 in a generally horizontal position with its open end 29b facing towards the rear of the machine. In this position, the motor 27 drives the impeller 24 which draws in air (as shown by the arrows B) via the collection chute 32b, the interior of the grass-box 29, and apertures 21 a in the deck 21. The air is drawn into the impeller 24 from the interior of the grass-box 29 via the open end 29b, the perforations 32a in the lid 32, and the apertures 21 a. There are, therefore, multiple routes by which the air can pass from the grass-box 29 and the lid 32 into the eye of the impeller 24. As the air is drawn in in this manner, it picks up cut grass deposited behind the machine, and carries it into the grass-box 29 where it is deposited. Air then escapes out of the open end 29b of the grass-box 29, and is sucked in by the impeller 24 via the perforated portions 32a of the lid 32 and the apertures 21a. When the motor 27 is turned on, the impeller draws air from inside the grass-box 29 through the perforations 29a, to force the bin liner 35 against the internal walls of the grass-box, the air pressure being effective to hold the liner against the internal walls in a fully-open configuration.

The rear wall 32c of the lid 32 is constituted by a transparent panel, so that the user can see into the machine to see when the grass-box 29 is filling up.

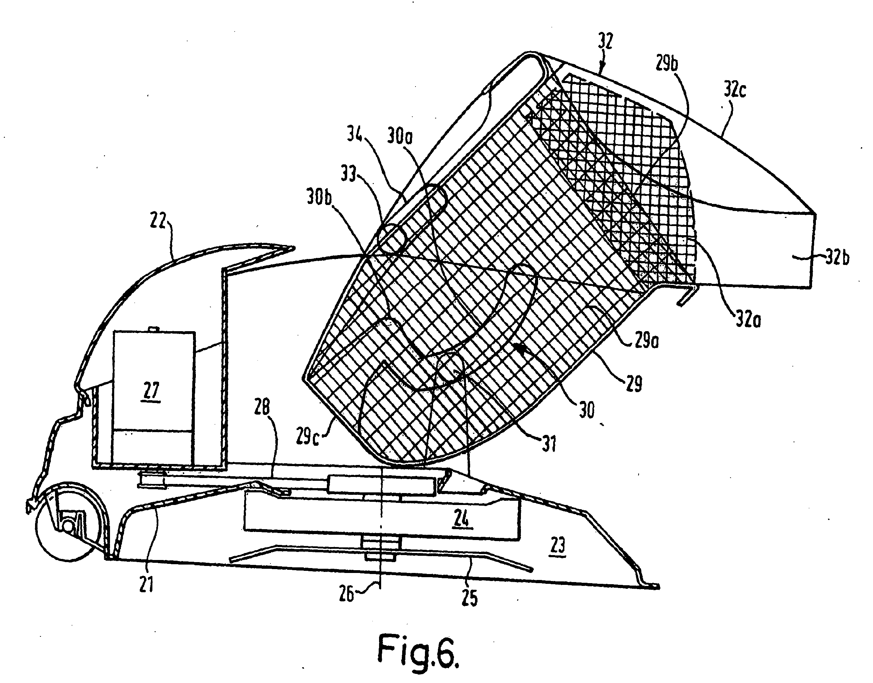

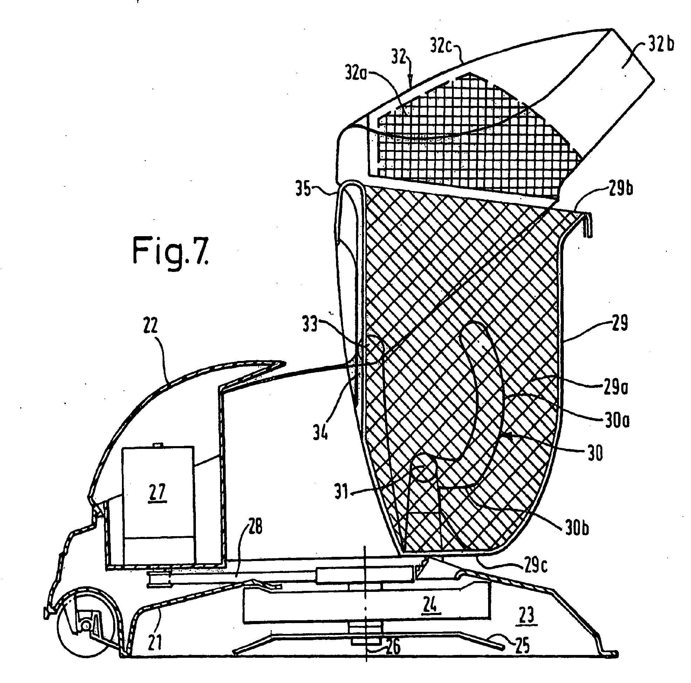

When the grass-box 29 is full, the motor 27 is turned off, and the lid 32 and the grass-box 29 are pivoted from the positions shown in Figure 5, through the positions in Figures 6 and 7, until they occupy positions shown in Figure 8. The lid 32 and the grass-box 29 are locked together, as they are pivoted from the position shown in Figure 5 towards the position shown in Figure 7, by the engagement of the cams 31 with the first portions 30a of the cam tracks 30, and by the engagement of the cams 32 with the cam tracks 34. During this pivotal movement, the cams 31 move along the first cam track portions 30a, and the cams 33 are constrained to remain substantially centrally within the cam tracks 34. Further joint pivotal movement of the lid 32 and the grass-box 29 causes the cams 31 to move along the cam track portions 30b until they reach the "corners" of these L-shaped track portions (see Figure 7). In this position, the cam tracks 34 are substantially vertical, and gravity forces the grass-box 29 downwards, so that the cams 33 move to the ends of the cam tracks 34, allowing the lid 32 to be pivoted further to the position shown in Figure 8. During this further pivotal movement of the lid 32, the grass-box 29 is prevented from pivoting by interengagement of the cams 31 with the "corners" of 32b L-shaped cam track portions 30b. The inner bin liner 35 can then be lifted out of the grass box, leaving the remaining bin liners in situ. The grass cuttings can then be carried in the bin liner 35 to a disposal point. If the disposal point is a bin, the whole bin liner 35 can simply be dropped in. It is, of course possible to empty the bin liner 35 for re-use.

In addition the grass-box 29 can be removed from the machine by lifting it vertically so that the cams 31 slide along the end sections of the cam track portions 30b. The grass-box 29 can then be transported to, for example, a compost heap or to a roadside collection point for emptying. As the grass-box 29 is substantially vertical during this removal process, there is little chance of grass being spilt during the process. After emptying, the grass-box 29 is positioned back into the machine with the end sections of the cam track portions 30b sliding along the cams 31, and with the cams 33 positioned at the ends of the cam tracks 34. The lid 32 is then rotated into engagement with the grass-box 29, and subsequently the two members are rotated together until they are in the positions shown in Figure 5.

It will be apparent that the hover mower described above has advantages when compared with known hover mowers. In particular, the open end of the grass-box 9 is somewhat smaller than the open end of known grass-boxes, and so is much easier to empty into a standard wheelie bin than known grass-boxes. Moreover, because cut grass enters the grass-box 29 through the open end 29b (when the grass-box is in the horizontal configuration shown in Figure 5) and is emptied from the same end, there is no need to provide the grass-box with a separate inlet aperture for cut grass, so there is a substantial reduction in the risk of cut grass spilling out when the grass-box is removed from the mower, as this can only be done when the grass-box is substantially vertical. It is also a major advantage, not only to remove the grass cuttings already bagged for disposal, but also to have several bags or bin liners one inside another so that full bags can be lifted out and put to one side while the user continues mowing. Obviously, the user will have a supply of bin liners 35 for use when cut grass is to be stored for subsequent kerb side collection. It is, of course, also possible to re-use a bin liner 35 if cut grass is emptied either onto a compost heap or into a wheelie bin.

It will be apparent that modifications could be made to the mower described above. Thus, the grass-box 9 could be arranged to pivot about a central longitudinal axis of the mower, in which case the grass-box would pivot from side-to-side rather than from front-to-rear as in the embodiment described above. It would also be possible to pivotally mount both the grass-box 29 and the lid 32 by simple pivot means, in which case disengagable interlock members would be provided on the grass-box and on the lid for holding those two members together during the first part of their pivotal movement, that is to say until they rotate from the position shown in Figure 5 to the position shown in Figure 3.

In another modified arrangement, instead of using bin liners made of plastics material, pre-shaped paper bags may be used. Here again a single paper bag or a stack of paper bags can be used. Such pre-shaped bags may be such as to be storable in a flat configuration.

It will also be apparent that the principle of using one or more bags inside a grass-box could be applied to grass-boxes of any suitable construction. In particular, it is not essential for such bags to be used with the "rotatable" grass-box 29 described above with reference to Figures 5 to 8.

It will also be apparent that the invention which utilises bags within a grass-box could also be used with other lawn care machines such as a scarifier. In that case, the bags would be positioned one inside another within the debris collector of the scarifier for collecting debris raked from a lawn by the machine. The stack of bags positioned with the debris collector will be removed one-by-one as they are filled, in a similar manner to that in which the nested bags are removed from the grass-box of the lawnmower described above. Accordingly, the invention is not limited to lawnmower applications, and the term "lawnmower" as used in the claims should be taken to include lawn care machines such as a scarifier. Similarly, the term "cut grass" should be taken to include debris raked from a lawn.

## Claims

1. A grass collector comprising two or more grass collection receptacles (10, 11) arranged to be nested within each other, each receptacle being removable from the grass collector, wherein each receptacle (10, 11) is arranged to be open-topped when the collector is open for removal of a receptacle.

2. A grass collector according to claim 1, wherein the grass collection receptacles (10,11) are separable.

3. A grass collector according to any one of the preceding claims, wherein one of the collection receptacles (10, 11) is an outer receptacle (10) within which the or each other receptacle (11) is locatable.

4. A grass collector according to claim 3, wherein the outer receptacle (10) is generally rigid.

5. A grass collector according to claim 3, wherein the outer receptacle (10) is at least in part, constructed of a flexible material.

6. A grass collector according to any one of claims 3 to 5, wherein the outer receptacle (10) includes an air permeable region arranged to retain grass cuttings therein.

7. A grass collector according to claim 6, wherein the or each other receptacle (11) includes an air permeable region arranged to retain grass cuttings therein.

8. A grass collector according to claim 7, wherein the air permeable region of the outer receptacle (10) is finer than that of the or each other receptacle (11).

9. A grass collector according to claim 5, wherein the receptacles (10, 11) are impermeable to air.

10. A grass collector according to any one of claims 1 to 8, wherein each receptacle (10, 11) is substantially identical

11. A grass collector according to any one of the preceding claims, wherein at least one of the receptacles (10, 11) is a basket.

12. A grass collector according to any one of the preceding claims, further comprising an enclosure casing (6) within which the receptacles (10, 11) are located.

13. A grass collector according to claim 12, wherein the enclosure casing (6) includes an openable cover (8).

14. A lawn mower (1) comprising a grass cutting system and a grass collector according to any one of the preceding claims.

15. A lawn mower (1) according to claim 14 wherein the grass collector is arranged generally above the grass cutting system.

16. A lawn mower (1) according to claim 14 or 15 including a body (6) defining an enclosure for retaining the receptacles (10, 11).

17. A lawn mower (1) according to any one of claims 14 to 16, wherein the receptacles (10, 11) are arranged as baskets which may be lifted out of the lawn mower (1).

18. A lawn mower (1) according to any one of claims 14 to 17, wherein the receptacles (10, 11) are substantially identical.

19. A method of operating a lawn mower (1) of the type which collects grass cuttings in a grass collector during mowing, comprising:
mowing a lawn;
removing a first grass collection receptacle (10, 11) from the grass collector nesting within a second grass collection receptacle (10, 11);
continuing to mow the lawn; and
removing the second grass collection receptacle (10, 11) from the grass collector, wherein each receptacle (10, 11) is arranged to be open-topped when the collector is open for removal of a receptacle (10,11).

## Patentansprüche

1. Grassammelvorrichtung mit zwei oder mehr Grassammelbehältern (10, 11), welche ineinander verschachtelbar sind, wobei jeder Behälter von der Grassammelvorrichtung entfernbar ist und jeder Behälter (10, 11) nach oben offen anordenbar ist, wenn die Sammelvorrichtung zur Entfernung eines Behälters offen ist.

2. Grassammelvortichtung nach Anspruch 1, wobei die Grassammelbehälter (10, 11) trennbar sind.

3. Grassammelvorrichtung nach einem der vorangehenden Ansprüche, wobei einer der Sammelbehälter (10, 11) ein Außenbehälter (10) ist, innerhalb welchem der oder jeder andere Behälter (11) anordenbar ist..

4. Grassammelvorrichtung nach Anspruch 3, wobei der Außenbehälter (10) im Wesentlichen steif ist.

5. Grassammelvornchtung nach Anspruch 3, wobei der Außenbehälter (10) zumindest teilweise aus einem flexiblen Material ausgebildet ist.

6. Grassammelvorrichtung nach einem der Ansprüche 3 bis 5, wobei der Außenbehälter (10) einen luftdurchlässigen Bereich enthält, welcher eingerichtet ist, um Grasabfall darin zurückzubehalten.

7. Grassammelvorrichtung nach Anspruch 6, wobei der oder jeder andere Behälter (121) einen luftdurchlässigen Bereich enthält, welcher eingerichtet ist, um Grasabfall darin zurückzubehalten.

8. Grassammelvorrichtung nach Anspruch 7, wobei der luftdurchlässige Bereich des Außenbehälters (10) feiner als der des oder jedes anderen Behälters (11) ist.

9. Grassammelvorrichtung nach Anspruch 5, wobei die Behälter (10, 11) luftundruchlässig sind.

10. Grassammelvorrichtung nach einem der Ansprüche 1 bis 8, wobei jeder Behälter (10, 11) im Wesentlichen identisch ist.

11. Grassammelvorrichtung nach einem der vorangehenden Ansprüche, wobei zumindest einer der Behälter (10, 11) ein Korb ist.

12. Grassammelvorrichtung nach einem der vorangehenden Ansprüche, welche zudem ein Einfassungsgehäuse (6) aufweist, innerhalb welchem sich die Behälter (10, 11) befinden.

13. Grassammelvorrichtung nach Anspruch 12, wobei das Einfassungsgehäuse (6) eine öffenbare Abdeckung (8) aufweist.

14. Rasenmäher (1) mit einem Grasschneidsystem und einer Grassammelvorrichtung nach einem der vorangehenden Ansprüche.

15. Rasenmäher (1) nach Anspruch 14, wobei die Grassammelvorrichtung im Wesentlichen über dem Grasschneidsystem angeordnet ist.

16. Rasenmäher (1) nach Anspruch 14 oder 15, welcher einen Körper (6) aufweist, welcher eine Einfassung zum Halten der Behälter (10, 11) definiert.

17. Rasenmäher (1) nach einem der Ansprüche 14 bis 16, wobei die Behälter (10, 11) als Körbe angeordnet sind, welche aus dem Rasenmäher (1) herausgehoben werden können.

18. Rasenmäher (1) nach einem der Ansprüche 14 bis 17, wobei die Behälter (10, 11) im Wesentlichen identisch sind.

19. Verfahren zum Betätigen eines Rasenmähers (1) der Art, welcher Grasabfall in einer Grassammelvorrichtung während dem Mähen sammelt, aufweisend:
Mäher eines Rasens;
Entfernen eines ersten Grassammelbehälters (10, 11) aus der Grassammelvorrichtungsverschachtelung innerhalb eines zweiten Grassammelbehälters (10, 11);
Fortfahren mit dem Mähen des Rasens; und
Entfernen des zweiten Grassammelbehälters (10, 11) aus der Grassammelvorrichtung, wobei jeder Behälter (10, 11) nach oben offen angeordnet ist, wenn die Sammelvorrichtung zur Entfernung eines Behälters (10, 11) offen ist.

## Revendications

1. Collecteur d'herbe comprenant deux réceptacles de collecte d'herbe (10, 11) ou plus, disposés de façon à être imbriqués l'un dans l'autre, chaque réceptacle pouvant être enlevé du collecteur d'herbe, dans lequel chaque réceptacle (10, 11) est disposé de façon à avoir la partie supérieure ouverte quand le collecteur est ouvert pour enlever un réceptacle.

2. Collecteur d'herbe selon la revendication 1, dans lequel les réceptacles de collecte d'herbe (10, 11) sont séparables.

3. Collecteur d'herbe selon l'une quelconque des revendications précédentes, dans lequel un des réceptacles de collecte (10, 11) est un réceptacle extérieur (10) dans lequel l'autre ou chaque autre réceptacle (11) peut être placé.

4. Collecteur d'herbe selon la revendication 3, dans lequel le réceptacle extérieur (10) est généralement rigide.

5. Collecteur d'herbe selon la revendication 3, dans lequel le réceptacle extérieur (10) est au moins en partie construit en matériau flexible.

6. Collecteur d'herbe selon l'une quelconque des revendications 3 à 5, dans lequel le réceptacle extérieur (10) comprend une zone perméable à l'air, disposée de façon à retenir les coupes d'herbe à l'intérieur.

7. Collecteur d'herbe selon la revendication 6, dans lequel l'autre ou chacun des autres réceptacles (11) comprend une zone perméable à l'air, disposée de façon à retenir des coupes d'herbe à l'intérieur.

8. Collecteur d'herbe selon la revendication 7, dans lequel la zone perméable à l'air du réceptacle extérieur (10) est plus fine que celle de l'autre ou de chaque autre réceptacle (11).

9. Collecteur d'herbe selon la revendication 5, dans lequel les réceptacles (10, 11) sont imperméables à l'air.

10. Collecteur d'herbe selon l'une quelconque des revendications 1 à 8, dans lequel chaque réceptacle (10, 11) est sensiblement identique.

11. Collecteur d'herbe selon l'une quelconque des revendications précédentes, dans lequel au moins un des réceptacles (10, 11) est un panier.

12. Collecteur d'herbe selon l'une quelconque des revendications précédentes, comprenant en outre un boîtier d'enceinte (6) dans lequel les réceptacles (10, 11) sont placés.

13. Collecteur d'herbe selon la revendication 12, dans lequel le boîtier d'enceinte (6) comprend un couvercle pouvant être ouvert (8).

14. Tondeuse (1) comprenant un système de coupe d'herbe et un collecteur d'herbe selon l'une quelconque des revendications précédentes.

15. Tondeuse (1) selon la revendication 14 dans laquelle le collecteur d'herbe est disposé généralement au-dessus du système de coupe d'herbe.

16. Tondeuse (1) selon l'une quelconque des revendications 14 ou 15, comprenant un corps (6) définissant une enceinte pour retenir les réceptacles (10, 11).

17. Tondeuse (1) selon l'une quelconque des revendications 14 à 16, dans laquelle les réceptacles (10, 11) sont disposés comme des paniers qui peuvent être levés et sortis de la tondeuse (1).

18. Tondeuse (1) selon l'une quelconque des revendications 14 à 17, dans laquelle les réceptacles (10, 11) sont sensiblement identiques.

19. Procédé de fonctionnement d'une tondeuse (1) du type qui récolte les découpes d'herbe dans un collecteur d'herbe pendant la tonte, comprenant les étapes consistant à ;
tondre une pelouse ;
enlever un premier réceptacle de collecte d'herbe (10, 11) du collecteur d'herbe, imbriqué dans un second réceptacle de collecte d'herbe (10, 11) ;
continuer la tonte de la pelouse ; et
enlever le second réceptacle de collecte d'herbe (10, 11) du collecteur d'herbe, dans lequel chaque réceptacle (10, 11) est disposé de façon à avoir la partie supérieure ouverte quand le collecteur est ouvert pour enlever un réceptacle (10, 11).
